# EUROPÄISCHE PATENTSCHRIFT

(11) **EP 0 733 788 B1**
(45) Veröffentlichungstag und Bekanntmachung des Hinweises auf die Patenterteilung: **17.07.2002**
(21) Anmeldenummer: 95116845.9
(22) Anmeldetag: 26.10.1995
(51) Int. Cl.: F01N 7/10, F01N 7/18

(54) **Rohrkrümmer für eine Brennkraftmaschine**
Manifold for an internal combustion engine
Collecteur pour un moteur à combustion interne

(30) Priorität: 24.02.1995 DE 19506473
(43) Veröffentlichungstag der Anmeldung: 25.09.1996
(73) Patentinhaber: Volkswagen Aktiengesellschaft, 38436 Wolfsburg (DE)
(72) Erfinder: Eichler, Friedrich, Dipl.-Ing., D-38124 Braunschweig (DE)

(56) Entgegenhaltungen:
- EP-A- 0 192 995
- EP-A- 0 284 466
- EP-A- 0 523 360
- EP-A- 0 623 739
- DE-C- 4 103 083
- DE-U- 9 407 812

## Beschreibung

Die Erfindung betrifft einen Rohrkrümmer für eine Brennkraftmaschine gemäß dem Oberbegriff des Patentanspruches 1.

Aus der DE 39 25 802 A1 ist ein gattungsgemäßer Rohrkrümmer bekannt, welcher einen aus mehreren Einzelrohren bestehenden Rohrkörper aufweist. Die eintrittsseitigen Rohrenden sind in einem allen Einzelrohren gemeinsamen Flansch eingegossen. Austrittsseitige Rohrenden sind in einer Rohrverzweigung eingegossen, welche zu diesem Zweck eine der Anzahl der Einzelrohre entsprechende Zahl von Rohrstutzen aufweist. Diese Rohrstutzen sind mit einem offensichtlich angeschweißten, plattenartigen Austrittsflansch verbunden, welcher eine einzige Austrittsöffnung aufweist.

Aus der EP 0 623 739 A1 ist ein Rohrkrümmer bekannt, dessen Rohre durch Innenhochdruckumformung hergestellt sind. Dieser Rohrkrümmer ist als sogenannter Doppelrohrkrümmer ausgeführt, bei welchem jeweils zwei Einzelrohre einstückig durch die Hochdruckumformung hergestellt sind.

Die EP 0 192 995 beschreibt einen Abgasrohrkrümmer für einen Verbrennungsmotor, wobei mehrere Auslaßrohre zu jeweils einem weiterführenden Abgasrohr zusammengeführt sind. Die weiterführenden Abgasrohre sind ihrerseits in ein gemeinsames Abgasrohr zusammengeführt. Gemäß einer Ausführungsform sind zwei Rohre in einem Trichter zusammengeführt und untereinander verschweißt, wobei Rohrenden ineinander geschoben sind.

Aus der EP 0 523 360 ist ein Y-Rohr für Zuleitungen zu Automobilkatalysatoren bekannt. Zur Anbindung des Y-Stückes an andere Rohre werden Gewindeverbindungen vorgeschlagen. Das Y-Rohr selbst wird mittels eines Innenhochdruckverfahrens hergestellt.

Das deutsche Gebrauchsmuster G 94 07 812 U1 beschreibt eine Rohrzusammenführung als Abgaskrümmer mit mindestens zwei Einlässen und eine Vorrichtung zu deren Herstellung. Mittels Innenhochdruckumformung wird eine schweißnahtfreie Ausführung hergestellt.

Bei einem Einsatz im Abgasstrang einer Brennkraftmaschine ist die Erzielung gleicher, abgestimmter Rohrlängen für jeden Zylinder zur Verbesserung des Ladungswechsels und des Liefergrades erforderlich. Hierdurch können komplizierte Geometrien der Rohre entstehen, welche nur in begrenztem Umfang in einem Stück als gestaltoptimierte Y-Verzweigung durch die Innenhochdruckumformung zu realisieren sind. Desweiteren ist die nur für eine ganz bestimmte Brennkraftmaschine optimal angepaßte, rechnergestützte Konstruktion eines solchen Rohrkrümmers aufwendig.

Der Erfindung liegt die Aufgabe zugrunde, einen gattungsgemäßen Rohrkrümmer zu schaffen, welcher in vereinfachter Weise und kostengünstig zu fertigen ist sowie in einfacher Weise an verschiedene Brennkraftmaschinen anpaßbar ist.

Diese Aufgabe wird erfindungsgemäß durch einen Rohrkrümmer der o.g. Art mit den in Anspruch 1 gekennzeichneten Merkmalen gelöst. Vorteilhafte Ausgestaltungen der Erfindung sind in den abhängigen Ansprüchen angegeben.

Bei einem Rohrkrümmer der o.g. Art ist es erfindungsgemäß vorgesehen, daß die Rohrverzweigung einteilig mit einem den Rohrstutzen gemeinsamen Verbindungsstutzen versehen durch Innenhochdruckumformung hergestellt ist, wobei die Rohrstutzen durch Schweißen zwischen den Öffnungen dieser Rohrstutzen und den Öffnungen der Einzelrohre verbunden sind, und daß die Einzelrohre zu Gruppen zusammengefaßt sind, welche jeweils mit einer Rohrverzweigung verbunden sind.

Die Lösung hat den Vorteil, daß die Herstellung eines solchen Rohrkrümmers dahingehend vereinfacht und kostengünstig durchführbar, daß die zum Teil mit einer komplizierten Geometrie versehenen Einzelrohre konventionell vorgefertigt werden und anschließend mit der durch das vorteilhafte Innenhochdruckumformverfahren hergestellten Rohrverzweigung durch Schweißen verbunden werden.

Bei einem Einsatz im Abgasstrang einer Brennkraftmaschine kann das vergleichsweise komplizierte und aufwendig zu berechnende, innenhochdruckumgeformte Teil an der bzw. den Stellen im Abgaskrümmer eingesetzt werden, welche thermisch und mechanisch am höchsten belastet sind.

Hierdurch entsteht ein relativ kurzes, kompaktes Bauteil, welches bei geeigneter geometrischer Auslegung in den unterschiedlichen Rohrkrümmern beispielsweise einer gesamten Motorenfamilie eingesetzt werden kann. Hierdurch ergeben sich deutliche Kosten- und Herstellzeitenvorteile gegenüber einem vollständig nach dem Innenhochdruckumformverfahren hergestellten Rohrkrümmer.

Die somit als Einheitsteil vergleichsweise aufwendig rechnerisch zu modellierende Rohrverzweigung muß somit lediglich einmalig konstruiert werden. Für die weitere Komplettierung von beispielsweise als Abgaskrümmer eingesetzten Rohrkrümmern verschiedener Brennkraftmaschine müssen nur die relativ leicht zu berechnenden und zu fertigenden Rohrlängen und Rohrformen der Einzelrohre des Rohrkörpers angepaßt werden. Insgesamt wird der Rechenaufwand erheblich reduziert und die aus den Berechnungen gewonnenen Aussagen werden zuverlässiger, was letztendlich den Versuchsaufwand kostensenkend reduziert.

In erfindungsgemäßer Ausgestaltung des Rohrkrümmers können, je nach Zylinderanzahl der Brennkraftmaschine, Einzelrohre zu Gruppen zusammengefaßt sein, welchen jeweils eine Rohrverzweigung zugeordnet ist. Bei der Verwendung mehrerer Rohrverzweigungen können vorteilhafterweise deren Verbindungsstutzen wiederum mit einer oder mehreren weiteren, nach dem gleichen Verfahren hergestellten Rohrverzweigungen verbunden sein.

Des weiteren können alle Einzelrohre des Rohrkörpers mit einer einzigen Rohrverzweigung verbunden sein, wobei diese beispielsweise bei einem dreizylindrigen Motor mit drei Rohrstutzen versehen sein kann.

Im Falle einer einfachen Rohrverzweigung mit zwei Rohrstutzen und einem Verbindungsstutzen sind die Längsmittelachsen der Stutzen in einer gemeinsamen, planen Ebene verlaufend angeordnet, wobei die Längsmittelachsen der beiden Rohrstutzen unter Bildung eines in der Ebene liegenden Winkels zueinander angeordnet sind.

Diese Längsmittelachsen können in weiterer vorteilhafter Ausgestaltung bezüglich der Ebene konvex gekrümmt verlaufend angeordnet sein, wobei sie unter Winkeln mit Werten von ca. 5 bis 30 Grad diese Ebene schneiden. Hierdurch üben die Rohrstutzen einen drallbildenden Einfluß auf das durchströmende Medium aus. Damit lassen sich zwei weitere Vorteile erzielen. Der vorgenannte Winkel muß zur Durchführung einer einwandfreien Verschweißung zwischen Rohrstutzen und Einzelrohren eine bestimmte Größe aufweisen, welche zu einem strömungsungünstigen Überströmen des Mediums von einem Rohrstutzen in den anderen führen kann. Dieses Überströmen wird durch den aufgezwungenen Drall reduziert. Des weiteren wird bei einem Einsatz in einem Abgasstrang einer Brennkraftmaschine eine Homogenisierung des Abgasstromes erzielt, was zu einer Vergleichmäßigung der Abgastemperatur über den Querschnitt des Abgasstranges führt. Dieses hat zur Folge, das ein z. B. motornah angeordneter Startkatalysator auf seiner Eintrittsoberfläche gleichmäßig beaufschlagt wird. Dieses führt im Gegensatz zu der sonst zu beobachtenden, nur lokalen Erwärmung des Katalysators zu einem verbesserten Abgasverhalten der Brennkraftmaschine.

Weitere Vorteile ergeben sich aus der nachfolgenden Beschreibung eines Ausführungsbeispieles der Erfindung anhand einer Zeichnung. Diese zeigt in
Fig. 1 eine Seitenansicht einer ersten Ausführungsform einer Rohrverzweigung,
Fig. 2 eine Draufsicht gemäß Figur 1,
Fig. 3 eine Seitenansicht einer zweiten Ausführungsform einer Rohrverzweigung und
Fig. 4 eine Draufsicht gemäß Figur 3.

Das Ausführungsbeispiel wird anhand eines als Abgaskrümmer eingesetzten Rohrkrümmers für eine nicht gezeigte Brennkraftmaschine erläutert. Zur Vereinfachung sind nur die erfindungsrelevanten Bereiche des Rohrkrümmers dargestellt, die Anbindung der dargestellten Einzelrohre an brennkraftmaschinenseitige Öffnungen kann in beliebiger, bekannter Weise erfolgen.

Der Rohrkrümmer weist einen aus Einzelrohren 1 bestehenden Rohrkörper 2 auf, dessen eintrittsseitige, nicht dargestellte Öffnungen mit korrespondierenden, brennkraftmaschinenseitigen Öffnungen verbunden sind. Austrittsseitig anderenends angeordnete Öffnungen 3 bzw. 4 sind mit korrespondierenden Öffnungen 5 bzw. 6 von Rohrstutzen 7 bzw. 8 einer Rohrverzweigung 9 verbunden.

Die Rohrverzweigung 9 weist austrittsseitig einen den Rohrstutzen 7, 8 gemeinsamen Verbindungsstutzen 10 auf, welcher den gesamten zugeführten Abgasstrom weiterleitet.

Jeweils zwei Einzelrohre 1 der Brennkraftmaschine sind zu einer Gruppe 11 zusammengefaßt, welche jeweils mit einer Rohrverzweigung 9 verbunden sind.

Im Falle einer vierzylindrigen Brennkraftmaschine können die beiden Verbindungsstutzen 10 der Rohrverzweigungen 9 mit den Rohrstutzen 7 bzw. 8 einer weiteren Rohrverzweigung 9 verbunden sein.

Im Falle einer zwei-, drei- oder vierzylindrigen Brennkraftmaschine können alternativ alle Einzelrohre 1 des Rohrkörpers 2 mit einer einzigen Rohrverzweigung 9 verbunden sein.

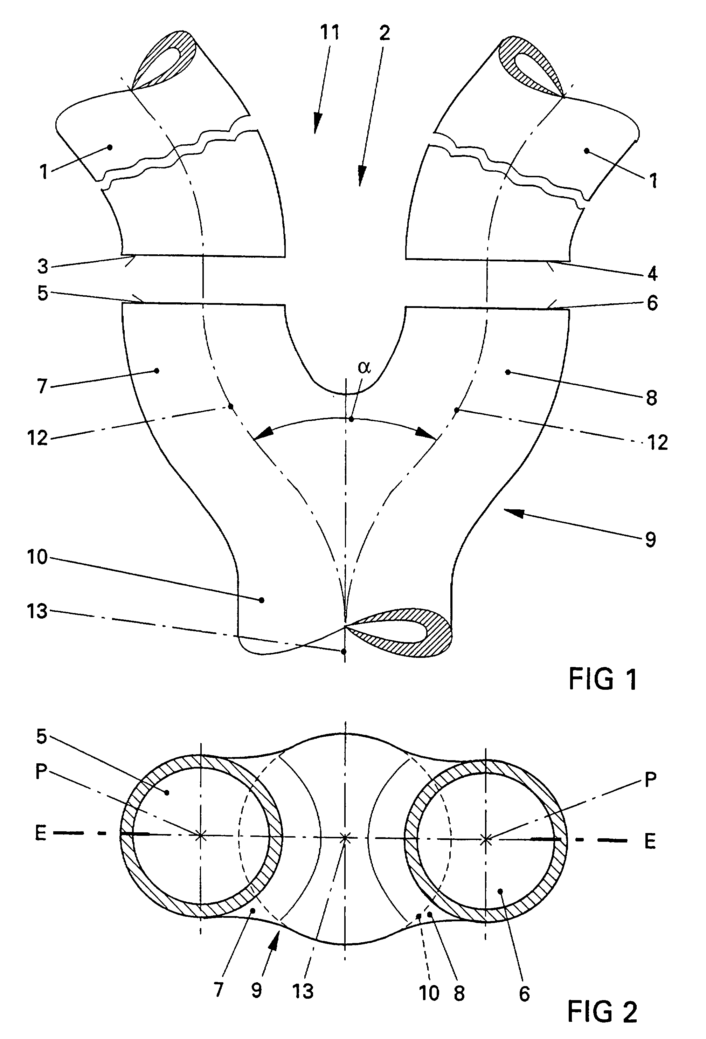

In einer ersten Ausführungsform gemäß Figuren 1 und 2 sind Längsmittelachsen 12 der Rohrstutzen 7, 8 und eine Längsmittelachse 13 des Verbindungsstutzens 10 in einer gemeinsamen, planen Ebene E-E verlaufend angeordnet.

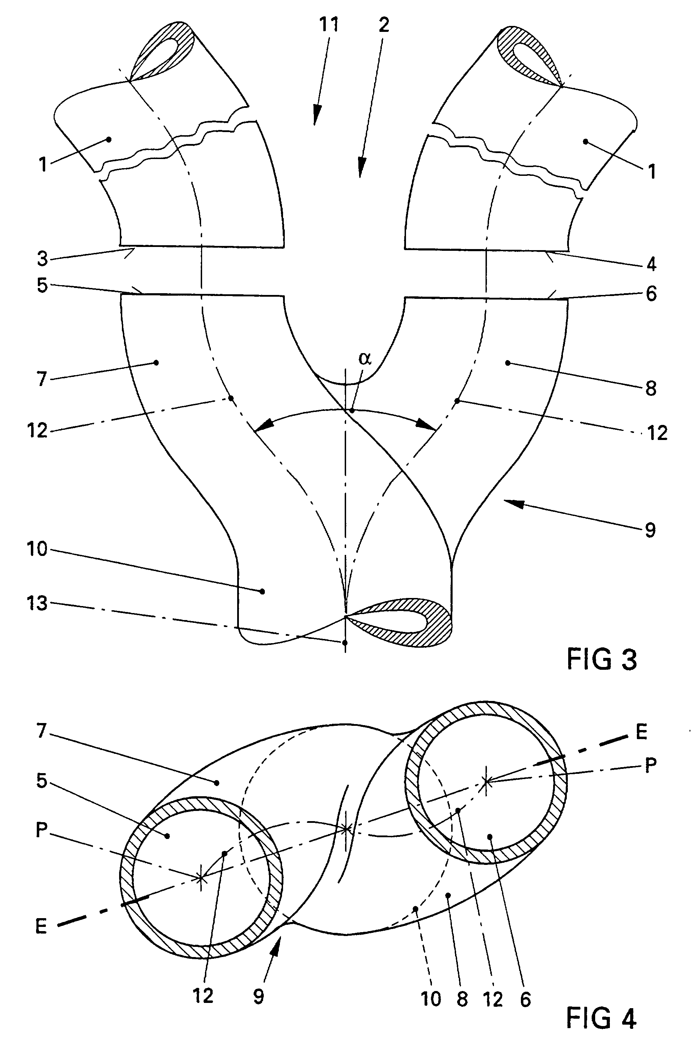

Die von Mittelpunkten P der Öffnungen 5 bzw. 6 ausgehenden Längsmittelachsen 12 können in der zweiten Ausführungsform gemäß Figur 3 und 4 drallbildend bezüglich der Ebene E-E konvex gekrümmt angeordnet sein. Hierdurch wird austrittsseitig im Verbindungsstutzen 10 eine gute Durchmischung und Homogenisierung der beiden Teilabgasströme erzielt.

Von dem erfindungsgemäßen Rohrkrümmer sind zumindest die Rohrverzweigungen 9 durch Innenhochdruckumformung hergestellt. Hierbei werden die Rohrstutzen 7, 8 und der Verbindungsstutzen 10 materialeinheitlich und einstückig in einem Arbeitsgang hergestellt. Die Einzelrohre 1 des Rohrkörpers 2 werden in individueller Anpassung an die jeweilige Brennkraftmaschine beispielsweise konventionell durch Biegung oder, falls möglich, ebenfalls durch Innenhochdruckumformung hergestellt. Kleinere Rohrdurchmesser können durch Aufweitstauchung an die korrespondierenden Öffnungen 5, 6 der Rohrverzweigung 9 angepaßt werden. In jedem Fall werden Einzelrohre 1 und Rohrstutzen 7, 8 durch Schweißung zwischen den Öffnungen 3 und 4 bzw. 5 und 6 miteinander verbunden.

Zur Erzielung einer einwandfreien Schweißung ist zwischen Außenwänden der Rohrstutzen 7, 8 ein Abstand von ca. 20 mm vorzusehen. Ein in der Ebene E-E liegender Winkel α zwischen den Längsmittelachsen 12 weist Werte in einem Bereich von 10 bis 40 Grad, vorzugsweise in einem Bereich von 20 bis 30 Grad auf. Ein Wert von 10 Grad für α ist ausreichend, wenn die Längsmittelachsen 12 als Geraden verlaufen, d. h. die Öffnungen 5 und 6 winkelig zueinander angeordnet sind. In Anpassung an brennkraftmaschinenindividuelle Gegebenheiten kann auch einer der Rohrstutzen 7 bzw. 8 einen gekrümmten Verlauf gemäß der Figuren, der andere jedoch einen geradlinigen Verlauf aufweisen.

Um bei zunehmenden Werten von α ein Überströmen von Abgas beispielsweise des Rohrstutzens 7 in den Rohrstutzen 8 zu verhindern, kann vorteilhafterweise die zuvor beschriebene, drallbildende zweite Ausführungsform angewendet werden. Vorteilhafterweise wird ein stromab an die Rohrverzweigung 9 angeschlossener, motornaher Katalysator gleichmäßig und schnell bei einem Start der Brennkraftmaschine erwärmt.

Bei Verwendung von zwei Rohrverzweigungen 9 für eine Brennkraftmaschine können deren Verbindungsstutzen 10 auf eine gemeinsame, im wesentlichen rechteckförmige Verbindungsplatte geschweißt sein, welche als Anschlußflansch für ein Vorrohr des weiteren Abgasstranges dient.

Zur Anpassung an den individuellen Verlauf der Einzelrohre der jeweiligen Brennkraftmaschine können dabei die Ebenen E-E der Rohrverzweigungen 9 schrägwinklig zur Längserstreckung dieses Flansches verlaufen.

## Patentansprüche

1. Rohrkrümmer für eine Brennkraftmaschine, mit einem mindestens zwei Einzelrohre (1) aufweisenden Rohrkörper (2), dessen Öffnungen einerseits zur Verbindung mit korrespondierenden, brennkraftmaschinenseitigen Öffnungen ausgebildet sind und deren anderenends angeordnete Öffnungen (3, 4) mit einer mindestens zwei, diesen Öffnungen (3, 4) zugewandten Rohrstutzen (7, 8) aufweisenden Rohrverzweigung (9) verbunden sind, **dadurch gekennzeichnet, daß** diese Rohrverzweigung (9) einteilig mit einem den Rohrstutzen (7, 8) gemeinsamen Verbindungsstutzen (10) versehen durch Innenhochdruckumformung hergestellt ist, wobei die Rohrstutzen (7, 8) durch Schweißen zwischen den Öffnungen (5, 6) dieser Rohrstutzen (7, 8) und den Öffnungen (3, 4) der Einzelrohre (1) verbunden sind, und daß entweder alle Einzelrohre (1) des Rohrkörpers (2) mit einer einzigen Rohrverzweigung (9) verbunden sind, oder daß die Einzelrohre (1) zu Gruppen (11) zusammengefaßt sind, welche jeweils mit einer Rohrverzweigung (9) verbunden sind.

2. Rohrkrümmer nach Anspruch 1, **dadurch gekennzeichnet, daß** die Verbindungsstutzen (10) der den Gruppen (11) zugeordneten Rohrverzweigungen (9) ihrerseits mit den Rohrstutzen mindestens einer weiteren Rohrverzweigung (9) verbunden sind.

3. Rohrkrümmer nach einem der vorhergehenden Ansprüche, **dadurch gekennzeichnet, daß** Längsmittelachsen (12 bzw. 13) der Rohrstutzen (7, 8) und des Verbindungsstutzens (10) einer Rohrverzweigung (9) in einer gemeinsamen, planen Ebene (E-E) verlaufend angeordnet sind.

4. Rohrkrümmer nach einem der Ansprüche 1 oder 2, **dadurch gekennzeichnet, daß** Längsmittelachsen (12, 13) der Rohrstutzen (7, 8) von in einer gemeinsamen Ebene (E-E) liegenden Mittelpunkten (P) der Öffnungen (3, 4) ausgehend konvex gekrümmt zu dieser Ebene (E-E) verlaufend angeordnet sind, derart, daß die beiden Teilabgasströme der Rohrstutzen (7, 8) einen Drall im Verbindungsstutzen (10) erzeugen.

## Claims

1. Pipe elbow for an internal combustion engine, with a pipe body (2) which has at least two individual pipes (1) and of which the orifices at one end are designed for connection to corresponding orifices located on the same side as the internal combustion engine and of which the orifices (3, 4) arranged at the other end are connected to a pipe branch (9) having at least two pipe pieces (7, 8) facing these orifices (3, 4), **characterized in that** this pipe branch (9) is produced in one part by internal-pressure forming, so as to be provided with a connection piece (10) common to the pipe pieces (7, 8), the pipe pieces (7, 8) being connected by welding between the orifices (5, 6) of these pipe pieces (7, 8) and the orifices (3, 4) of the individual pipes (1), and **in that** either all the individual pipes (1) of the pipe body (2) are connected to a single pipe branch (9), or **in that** the individual pipes (1) are combined into groups (11) which are connected in each case to a pipe branch (9).

2. Pipe elbow according to Claim 1, **characterized in that** the connection pieces (10) of the pipe branches (9) assigned to the groups (11) are themselves connected to the pipe pieces of at least one further pipe branch (9).

3. Pipe elbow according to one of the preceding claims, **characterized in that** the longitudinal centre axes (12 and 13) of the pipe pieces (7, 8) and of the connection piece (10) of a pipe branch (9) are arranged so as to run in a common planar plane (E-E).

4. Pipe elbow according to one of Claims 1 and 2, **characterized in that** the longitudinal centre axes (12, 13) of the pipe pieces (7, 8), starting from centre points (P), lying in a common plane (E-E), of the orifices (3, 4), are arranged so as to run in a convexly curved manner in relation to this plane (E-E), in such a way that the two exhaust-gas part-streams of the pipe pieces (7, 8) generate a swirl in the connection piece (10).

## Revendications

1. Collecteur pour un moteur à combustion interne, avec un corps tubulaire (2) présentant au moins deux tubes individuels (1), dont les ouvertures sont configurées d'une part pour se raccorder à des ouvertures correspondantes du côté du moteur à combustion interne et dont les ouvertures (3, 4) disposées aux autres extrémités sont raccordées à un manifold (9) présentant au moins deux tubulures (7, 8) orientées vers ces ouvertures (3, 4), **caractérisé en ce que** ce manifold (9) est fabriqué par déformation sous haute pression interne en une seule pièce en étant pourvu d'une tubulure de raccordement (10) commune aux tubulures (7, 8), dans lequel les tubulures (7, 8) sont assemblées par soudage entre les ouvertures (5, 6) de ces tubulures (7, 8) et les ouvertures (3, 4) des tubes individuels (1), et **en ce que** soit tous les tubes individuels (1) du corps tubulaire (2) sont raccordés à un seul manifold (9), soit les tubes individuels (1) sont rassemblés en groupes (11), qui sont chacun raccordés à un manifold (9).

2. Collecteur suivant la revendication 1, **caractérisé en ce que** les tubulures de raccordement (10) des manifolds (9) associés aux groupes (11) sont de leur côté raccordées aux tubulures d'au moins un manifold (9) supplémentaire.

3. Collecteur suivant l'une quelconque des revendications précédentes, **caractérisé en ce que** les axes centraux longitudinaux (12, respectivement 13) des tubulures (7, 8) et de la tubulure de raccordement (10) d'un manifold (9) sont situés dans un plan commun (E-E).

4. Collecteur suivant l'une quelconque des revendications 1 ou 2, **caractérisé en ce que** les axes centraux longitudinaux (12, 13) des tubulures (7, 8) sont, en partant de points centraux (P) des ouvertures (3, 4) situés dans un plan commun (E-E), disposés avec une courbure convexe vers ce plan (E-E), de telle manière que les deux courants partiels de gaz d'échappement des tubulures (7, 8) produisent un tourbillon dans la tubulure de raccordement (10).
